# FASCICULE DE BREVET EUROPEEN

(11) **EP 2 178 760 B1**
(45) Date de publication et mention de la délivrance du brevet: **30.11.2011**
(21) Numéro de dépôt: 08828514.3
(22) Date de dépôt: 12.06.2008
(51) Int. Cl.: B64D 29/08, B64D 29/06

(54) **NACELLE DE TURBORÉACTEUR, DESTINÉE À ÉQUIPER UN AÉRONEF**
TRIEBWERKSGONDEL ZUM EINBAU IN EIN FLUGZEUG
JET ENGINE NACELLE INTENDED TO EQUIP AN AIRCRAFT

(30) Priorité: 20.08.2007 FR 0705922
(43) Date de publication de la demande: 28.04.2010
(73) Titulaire: Aircelle, 76700 Gonfreville l'Orcher (FR)
(72) Inventeur: BOURDON, Gilles, F-76000 Le Havre (FR)
(74) Mandataire: Chevalier, Renaud Philippe
(86) Numéro de dépôt international: PCT/FR2008/000812
(87) Numéro de publication internationale: WO 2009/027590

(56) Documents cités:
- EP-A- 1 245 769
- EP-A- 1 515 006
- FR-A- 2 771 330
- GB-A- 2 266 080
- GB-A- 2 384 827

## Description

L'invention se rapporte à nacelle de turboréacteur destinée à équiper un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une telle nacelle est connue de EP 1 245 769 A2 qui est considéré comme l'art antérieur le plus proche et décrit les charactéristiques du préambule de la revendication 1.

Une nacelle présente généralement une structure externe, qui définit, avec une structure interne concentrique, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la nacelle est usuellement formée d'une première et d'une deuxième demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles sont généralement montées pivotantes autour d'un axe longitudinal formant charnière en partie supérieure (à 12 heures) de la nacelle. Les demi-coquilles sont maintenues en position de fermeture au moyen de dispositifs de verrouillage disposés le long d'une ligne de jonction située en partie inférieure (à 6 heures).

Les sections médiane et arrière sont, de manière classique, reliées l'une à l'autre par un cadre fixe par rapport au turboréacteur, les première et seconde demi-coquilles étant généralement équipées de moyens de positionnement coopérant en position de travail avec des moyens de positionnement complémentaires ménagés sur le cadre.

Une nacelle de ce type présente les inconvénients exposés ci-après.

Lors des opérations de maintenance, les deux demi-coquilles sont écartées l'une de l'autre de sorte que les moyens de positionnement des demi-coquilles ne coopèrent plus avec les moyens de positionnement complémentaires du cadre fixe.

Dans ce cas, les demi-coquilles peuvent se déplacer en translation le long de leur axe de sorte que, lors de la fermeture de la nacelle, c'est-à-dire lors du rapprochement des demi-coquilles, les moyens de positionnement des demi-coquilles ne soient plus disposés en regard des moyens de positionnement complémentaires du cadre

Cela peut engendrer des détériorations des moyens de positionnement qui sont par ailleurs des pièces dites sensibles, soumises à de fortes contraintes en fonctionnement, c'est-à-dire lors du vol de l'aéronef équipé de la nacelle. Dans le cas d'une détérioration trop importante de ces moyens de positionnement, les demi-coquilles peuvent être amenées à se déplacer lors du vol sous l'effet des contraintes qu'elles subissent et conduire dans ce cas pour le moins à une dégradation préjudiciable du matériel.

L'invention vise à remédier en tout ou partie à ces inconvénients en proposant une nacelle dont la maintenance n'engendre pas un endommagement prématuré des pièces dites sensibles.

A cet effet, l'invention concerne une nacelle de turboréacteur, destinée à équiper un aéronef, comprenant une section avant d'entrée d'air, une section médiane destinée à entourer une soufflante du turboréacteur, et une section arrière formée à partir d'au moins une première et une seconde demi-coquilles montées mobiles en rotation sur un axe de manière à pouvoir se déployer chacune entre une position de travail dans laquelle les demi-coquilles sont rapprochées l'une de l'autre et une position de maintenance dans laquelle les demi-coquilles sont écartées l'une de l'autre, les sections médiane et arrière étant reliées l'une à l'autre par un cadre fixe par rapport au turboréacteur, les première et seconde demi-coquilles étant équipées de moyens de positionnement coopérant en position de travail avec des moyens de positionnement complémentaires ménagés sur le cadre fixe, caractérisée en ce que la première demi-coquille au moins est équipée de moyens de blocage coopérant en position de maintenance avec des moyens de blocage complémentaires disposés sur le cadre, de manière à empêcher la translation de la première demi-coquille sur son axe.

De cette manière, la première demi-coquille est maintenue en position le long de son axe lors de la maintenance de la nacelle ou du réacteur. Lorsque les demi-coquilles sont à nouveau rapprochées l'une de l'autre, les moyens de positionnement peuvent coopérer avec les moyens de positionnement complémentaires sans détérioration de ceux-ci.

De préférence, la seconde demi-coquille est équipée de moyens de blocage similaires à ceux de la première demi-coquille. En variante, la seconde demi-coquille pourrait également être rendue solidaire en translation de la première demi-coquille.

Ainsi, les frottements et l'usure apparaissant lors des opérations de maintenance concernent uniquement les moyens de blocage ainsi que les moyens de blocage complémentaires, qui sont des parties non sensibles de la nacelle et pouvant en outre être aisément remplacées du fait de leur disposition au sein de la nacelle.

Avantageusement, les moyens de blocage comportent un doigt disposé sur la première demi-coquille, les moyens de blocage complémentaires comportant une rainure disposée sur le cadre, ou inversement.

Selon une caractéristique de l'invention, en position de travail de la première demi-coquille, le doigt de blocage est en retrait de la rainure, et, en position de maintenance de la première demi-coquille, le doigt de blocage est inséré dans la rainure.

De cette manière, les moyens de blocage ne sont actifs, c'est-à-dire ne remplissent leur fonction de blocage en translation, qu'en position de maintenance. Ils n'ont donc aucune influence sur le comportement de la nacelle en vol.

Préférentiellement, le doigt de blocage est disposé à proximité de l'axe d'articulation de la demi-coquille correspondante.

Selon une possibilité de l'invention, la rainure est délimitée par un profilé en U fixé sur le cadre fixe.

De cette manière, en cas d'usure du profilé, ce dernier est facilement remplaçable et ne nécessite pas d'intervention ou d'usinage particulier sur le cadre fixe.

Avantageusement, la rainure comporte des parois latérales inclinées l'une par rapport à l'autre de manière à former un rétrécissement de la rainure dans le sens d'engagement du doigt de blocage à l'intérieur de celle-ci lors du rapprochement des demi-coquilles l'une par rapport à l'autre.

Les parois latérales assurent ainsi un guidage du doigt lors de la fermeture de la nacelle, c'est-à-dire lors du rapprochement des demi-coquilles l'une par rapport à l'autre. Ce guidage permet de s'affranchir de tolérances ajustées de positionnement du doigt par rapport à la rainure à la fin des opérations de maintenance, lorsqu'il s'agit de refermer la nacelle.

Selon une caractéristique de l'invention, la largeur du doigt de blocage est sensiblement égale à la largeur de la rainure dans sa zone rétrécie.

Préférentiellement, le doigt de blocage et la rainure correspondante sont agencés de manière à permettre, lors du rapprochement des demi-coquilles l'une par rapport à l'autre, le contact des moyens de positionnement avec les moyens de positionnement complémentaires uniquement lorsque le doigt atteint la zone rétrécie de rainure.

Lorsque le doigt atteint la zone rétrécie de la rainure, le débattement de ce doigt dans la rainure selon l'axe de la demi-coquille est quasiment nul de sorte qu'un positionnement précis de la demi-coquille par rapport au cadre fixe est obtenu. De cette manière, il est assuré que les moyens de positionnement coopèrent bien avec les moyens de positionnement complémentaires sans frottement ou usure.

L'invention concerne en outre un aéronef, caractérisé en ce qu'il est équipée d'au moins une nacelle selon l'invention.

De toute façon, l'invention sera bien comprise à l'aide de la description qui suit en référence au dessin schématique annexé représentant, à titre d'exemple, une forme de réalisation de cette nacelle.
Figure 1 est une vue schématique d'une nacelle en coupe longitudinale ;
Figure 2 est une vue éclatée de la section arrière de la nacelle, en perspective ;
Figure 3 est une vue agrandie, en perspective, des moyens de positionnement des demi-coquilles par rapport au cadre fixe ;
Figure 4 à 6 sont des vues agrandies des moyens précités, respectivement en position de maintenance, dans une position intermédiaire et en position de travail de la nacelle.

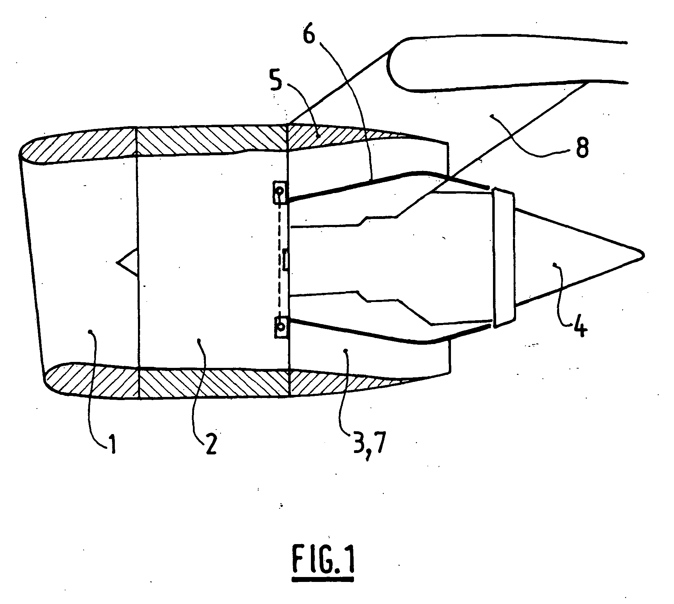

La figure 1 représente une nacelle selon l'invention, destinée à équiper un aéronef. Celle-ci présente une structure tubulaire comprenant une entrée d'air 1 en avant du turboréacteur, une section médiane 2 destinée à entourer une soufflante du turboréacteur, une section arrière 3 pouvant abriter des moyens d'inversion de poussée et destinée à entourer la chambre de combustion du turboréacteur, et est terminée par une tuyère d'éjection 4 dont la sortie est située en aval du turboréacteur.

La nacelle est destinée à abriter un turboréacteur double flux apte à générer par l'intermédiaire des pâles de la soufflante en rotation un flux d'air chaud (également appelé flux primaire) issu de la chambre de combustion du turboréacteur.

La nacelle présente une structure externe 5, qui définit, avec une structure interne concentrique 6, un canal annulaire d'écoulement 7, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'aéronef est ainsi formé par une nacelle et un turboréacteur, et est suspendu à une structure fixe de l'aéronef, par exemple sous une aile ou sur le fuselage, par l'intermédiaire d'un pylône ou mât 8 rattaché au turboréacteur ou à la nacelle.

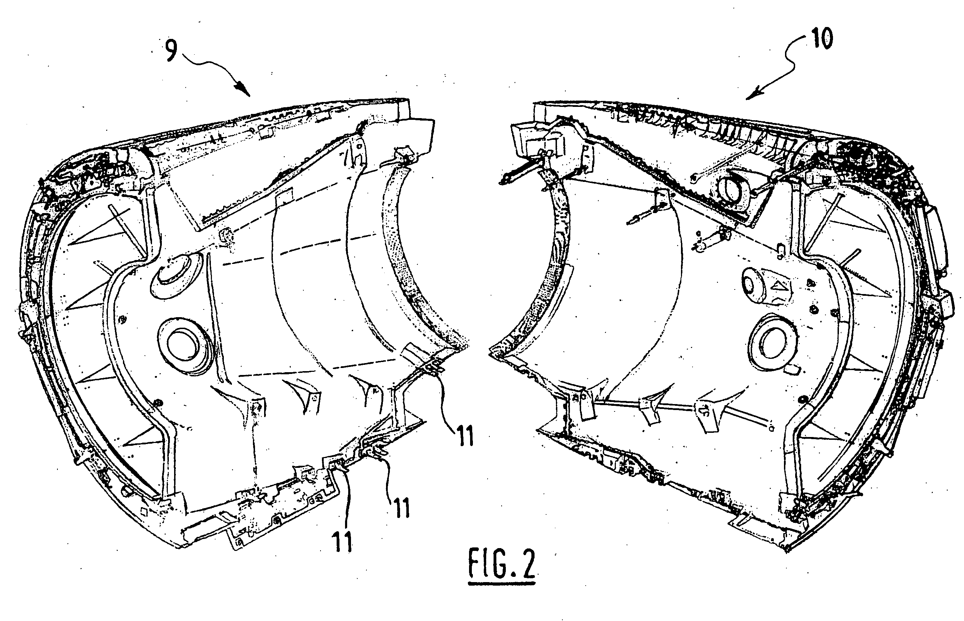

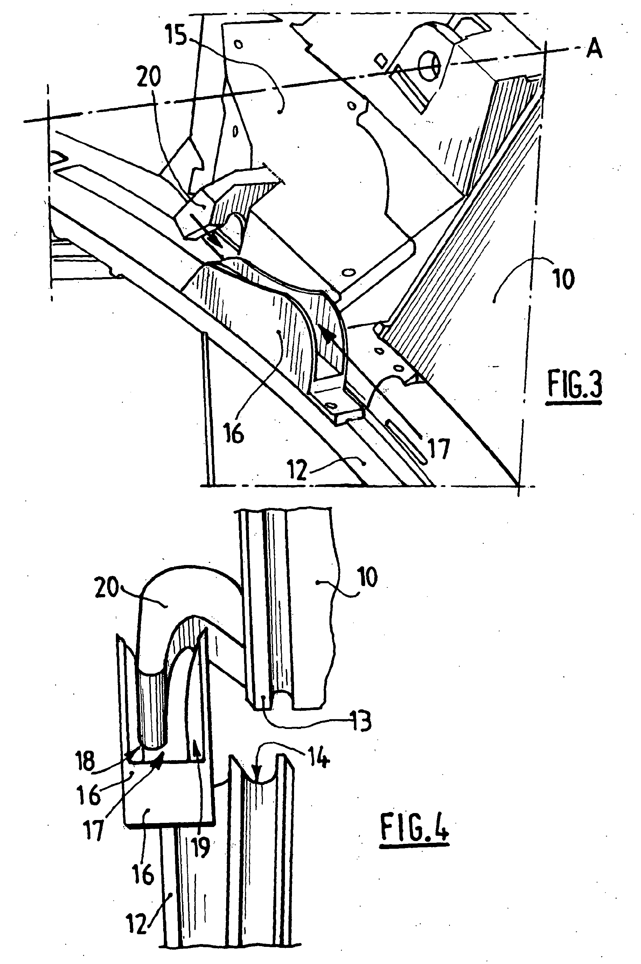

Comme cela apparaît à la figure 2, la section arrière 5 de la nacelle est formée d'une première et d'une deuxième demi-coquilles 9, 10 de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles 9, 10 sont montées pivotantes autour d'un axe A, visible plus particulièrement la figure 3, formant charnière en partie supérieure (à 12 heures) de la nacelle. Les demi-coquilles 9, 10 sont maintenues en position de fermeture au moyen de dispositifs de verrouillage 11 disposés le long d'une ligne de jonction située en partie inférieure (à 6 heures).

Les sections médiane et arrière 2, 3 sont, de manière classique, reliées l'une à l'autre par un cadre fixe 12 par rapport au turboréacteur, les première et seconde demi-coquilles étant équipées de moyens de positionnement coopérant en position de travail avec des moyens de positionnement complémentaires ménagés sur le cadre fixe 12.

Comme cela ressort plus particulièrement des figures 4 à 6, les moyens de positionnement comportent une nervure annulaire biseautée 13, de profil général en V, les moyens de positionnement complémentaires présentant une rainure 14 de forme et de profil complémentaires.

La nacelle comporte en outre des moyens de blocage disposé sur chaque demi-coquilles 9, 10, et coopérant avec des moyens de blocage complémentaires disposés sur le cadre fixe 12.

Les moyens de blocage sont disposés en en partie supérieure (à 12 heures) de chaque demi-coquille 9, 10. Ceux-ci comportent un doigt 20 venant d'un seul tenant avec un corps intermédiaire 15 fixé à la demi-coquille correspondante 9,10. Les moyens de positionnement complémentaires comportent un profilé en U 16, fixé au cadre fixe 12 en regard du doigt 20.

Le profilé en U 16 délimite une rainure 17 à l'intérieur de laquelle le doigt 20 est inséré lors du pivotement de la demi-coquille correspondante 9, 10, la rainure 17 comportant une première et une seconde paroi latérales 18, 19 inclinées l'une par rapport à l'autre de manière à former un rétrécissement de la rainure 17.

La largeur du doigt de blocage 20 est sensiblement égale à la largeur de la zone rétrécie de la rainure 17.

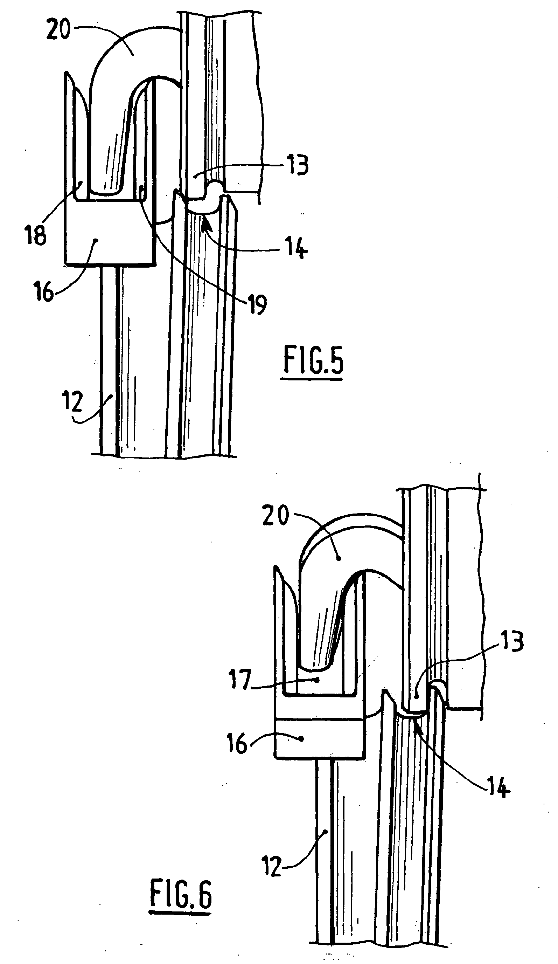

Les figures 3 et 6 représentent la nacelle en position de travail, dans laquelle les demi-coquilles 9, 10 sont rapprochées l'une de l'autre.

Dans cette position, le doigt 20 est écarté de la rainure 17 formée par le profilé en U 16 et la nervure en V 13 de chaque demi-coquille 9, 10 est insérée dans la rainure complémentaire 14 du cadre fixe 12 de sorte qu'une translation des demi-coquilles 9, 10 selon l'axe A est empêchée.

Lorsque l'une au moins des demi-coquille 9, 10 est amenée de la position de travail à la position de maintenance, la nervure 13 est écartée de la rainure complémentaire 14.

Simultanément, le doigt 20 est déplacé par rapport à la rainure formée par le profilé, comme cela est indiqué par une flèche à la figure 3.

Le doigt 20 est alors inséré dans la rainure 17, de sorte que, en position de maintenance des demi-coquilles 9, 10, le doigt 20 est apte à venir en butée contre les parois latérales 18, 19 de manière à bloquer ou à immobiliser la demi-coquille correspondante 9, 10 en translation selon l'axe A.

Une fois les opérations de maintenance terminées, les demi-coquilles 9, 10 sont à nouveau rapprochées l'une de l'autre, c'est-à-dire sont déplacées en position de travail.

Les parois latérales 18, 19 sont inclinées de manière à rétrécir dans le sens d'engagement du doigt 17 à l'intérieur de la rainure lors du rapprochement des demi-coquilles l'une par rapport à l'autre. Lorsque le doigt atteint la zone rétrécie, comme cela est représenté en figure 5, le débattement de la demi-coquille correspondante 9, 10 par rapport au cadre fixe 12 est limité de manière à assurer un bon positionnement de la nervure en V 13 par rapport à la rainure correspondante 14.

La nervure en V 13 est alors insérée progressivement dans la rainure 14 précitée, l'usure de ces deux éléments dits sensibles étant limitée du fait de leur bon positionnement préalable.

Lorsque le mouvement de rapprochement des deux demi-coquilles 9, 10 se poursuit, le doigt 20 se dégage dans la rainure 17 formée par le profilé en U 16 et la nervure en V 13 poursuit son introduction dans la rainure correspondante 14 jusqu'à atteindre la position représentée à la figure 6 dans laquelle les deux demi-coquilles 9, 10 sont en position de travail, c'est-à-dire sont complètement rapprochées l'une de l'autre.

Le système présenté ci-dessus, permettant le guidage des demi-coquilles lors de leur ouverture respective ainsi que le blocage en translation de la demi-coquille correspondante en position de maintenance, permet également de former un guide de pré-positionnement de chaque demi-coquille lors de leur installation sur l'aéronef.

Comme il va de soi l'invention ne se limite pas à la seule forme de réalisation de cette nacelle de turboréacteur, décrite ci-dessus à titre d'exemple, mais elle embrasse au contraire toutes les variantes couvertes par l'étendue des revendications 1 à 9. C'est ainsi notamment que chaque demi-coquille pourrait être équipée d'un profilé en U coopérant avec un doigt disposé sur le cadre fixe.

## Revendications

1. Nacelle de turboréacteur, destinée à équiper un aéronef, comprenant une section avant (1) d'entrée d'air, une section médiane (2) destinée à entourer une soufflante du turboréacteur, et une section arrière (3) formée à partir d'au moins une première et une seconde demi-coquilles (9, 10) montées mobiles en rotation sur un axe (A) de manière à pouvoir se déployer chacune entre une position de travail dans laquelle les demi-coquilles (9, 10) sont rapprochées l'une de l'autre et une position de maintenance dans laquelle les demi-coquilles (9, 10) sont écartées l'une de l'autre, les sections médiane et arrière (2, 3) étant reliées l'une à l'autre par un cadre fixe (12) par rapport au turboréacteur, les première et seconde demi-coquilles (9, 10) étant équipées de moyens de positionnement (13) coopérant en position de travail avec des moyens de positionnement complémentaires (14) ménagés sur le cadre fixe (12), **caractérisée en ce que** la première demi-coquille (10) au moins est équipée de moyens de blocage (20) coopérant en position de maintenance avec des moyens de blocage complémentaires (16, 17) disposés sur le cadre fixe (12), de manière à empêcher la translation de la première demi-coquille (10) sur son axe (A).

2. Nacelle selon la revendication 1, **caractérisée en ce que** les moyens de blocage comportent un doigt (20) disposé sur la première demi-coquille (10), les moyens de blocage complémentaires comportant une rainure (17) disposée sur le cadre fixe (12), ou inversement.

3. Nacelle selon la revendication 2, **caractérisée en ce que**, en position de travail de la première demi-coquille (10), le doigt de blocage (20) est en retrait de la rainure (17), et **en ce que**, en position de maintenance de la première demi-coquille (10), le doigt de blocage (20) est inséré dans la rainure (17).

4. Nacelle selon l'une des revendications 2 ou 3, **caractérisée en ce que** le doigt de blocage (20) est disposé à proximité de l'axe d'articulation (A) de la demi-coquille correspondante (9, 10).

5. Nacelle selon l'une des revendications 2 à 4, **caractérisée en ce que** la rainure (17) est délimitée par un profilé en U (16) fixé sur le cadre fixe (12).

6. Nacelle selon l'une des revendications 2 à 5, **caractérisée en ce que** la rainure (17) comporte des parois latérales (18, 19) inclinées l'une par rapport à l'autre de manière à former un rétrécissement de la rainure (17) dans le sens d'engagement du doigt de blocage (20) à l'intérieur de celle-ci lors du rapprochement des demi-coquilles (9, 10) l'une par rapport à l'autre.

7. Nacelle selon la revendication 6, **caractérisée en ce que** la largeur du doigt de blocage (20) est sensiblement égale à la largeur de la rainure (17) dans sa zone rétrécie.

8. Nacelle selon l'une des revendications 6 ou 7, **caractérisée en ce que** le doigt de blocage (20) et la rainure correspondante (17) sont agencés de manière à permettre, lors du rapprochement des demi-coquilles (9, 10) l'une par rapport à l'autre, le contact des moyens de positionnement (13) avec les moyens de positionnement complémentaires (14) uniquement lorsque le doigt (20) atteint la zone rétrécie de rainure (17).

9. Aéronef, **caractérisé en ce qu'**il est équipée d'au moins une nacelle selon l'une des revendications 1 à 8.

## Claims

1. A turbojet nacelle designed to be fitted to an aircraft, comprising a forward air-intake section (1), a mid-section (2) designed to surround a fan of the turbojet, and an aft section (3) formed from at least a first half-shell and a second half-shell (9, 10) mounted so as to be able to rotate on an axis (A) so that each of them can deploy between a working position in which the half-shells (9, 10) are brought closer to one another and a maintenance position in which the half-shells (9, 10) are separated from one another, the mid-section and aft section (2, 3) being connected to one another by a frame (12) that is fixed relative to the turbojet, the first and second half-shells (9, 10) being fitted with positioning means (13) interacting in the working position with matching positioning means (14) arranged on the fixed frame (12), **characterized in that** the first half-shell (10) at least is fitted with immobilization means (20) interacting, in the maintenance position, with matching immobilization means (16, 17) placed on the fixed frame (12), in order to prevent the translation of the first half-shell (10) on its axis (A).

2. The nacelle as claimed in claim 1, **characterized in that** the immobilization means comprise a finger (20) placed on the first half-shell (10), the matching immobilization means comprising a groove (17) placed on the fixed frame (12), or vice versa.

3. The nacelle as claimed in claim 2, **characterized in that**, in the working position of the first half-shell (10), the immobilization finger (20) is retracted from the groove (17), and **in that**, in the maintenance position of the first half-shell (10), the immobilization finger (20) is inserted into the groove (17).

4. The nacelle as claimed in one of claims 2 or 3, **characterized in that** the immobilization finger (20) is placed close to the axis of articulation (A) of the corresponding half-shell (9, 10).

5. The nacelle as claimed in one of claims 2 to 4, **characterized in that** the groove (17) is delimited by a U-shaped section piece (16) fixed to the fixed frame (12).

6. The nacelle as claimed in one of claims 2 to 5, **characterized in that** the groove (17) comprises sidewalls (18, 19) that are inclined relative to one another so as to form a narrowing of the groove (17) in the direction of engagement of the immobilization finger (20) inside the latter when the half-shells (9, 10) are brought closer to one another.

7. The nacelle as claimed in claim 6, **characterized in that** the width of the immobilization finger (20) is substantially equal to the width of the groove (17) in its narrowed zone.

8. The nacelle as claimed in one of claims 6 or 7, **characterized in that** the immobilization finger (20) and the corresponding groove (17) are arranged so as to allow, when the half-shells (9, 10) are brought closer to one another, the positioning means (13) to come into contact with the matching positioning means (14) only when the finger (20) reaches the narrowed zone of the groove (17).

9. An aircraft, **characterized in that** it is fitted with at least one nacelle as claimed in one of claims 1 to 8.

## Patentansprüche

1. Turbotriebswerksgondel, die dazu bestimmt ist, ein Luftfahrzeug auszustatten, die einen vorderen Lufteintrittsabschnitt (1), einen mittleren Abschnitt (2), der dazu bestimmt ist, ein Gebläse des Turbotriebwerks zu umgeben, und einen hinteren Abschnitt (3) umfasst, der aus mindestens einer ersten und einer zweiten Halbschale (9, 10) gebildet wird, die in Rotation bewegbar derart auf einer Achse (A) montiert sind, dass sie sich jeweils zwischen einer Arbeitsstellung bewegen können, in der die Halbschalen (9, 10) aneinander angenähert sind, und einer Wartungsstellung, in der die Halbschalen (9, 10) voneinander beabstandet sind, wobei der mittlere und hintere Abschnitt (2, 3) miteinander durch einen im Verhältnis zum Turbotriebwerk starren Rahmen (12) verbunden sind, wobei die erste und zweite Halbschale (9, 10) mit Positionierungsmitteln (13) ausgestattet sind, die in Arbeitsstellung mit komplementären Positionierungsmitteln (14) zusammenarbeiten, die auf dem starren Rahmen (12) ausgebildet sind, **dadurch gekennzeichnet, dass** mindestens die erste Halbschale (10) mit Blockiermitteln (20) ausgestattet ist, die in Wartungsstellung mit komplementären Blockiermitteln (16, 17) zusammenarbeiten, die auf dem starren Rahmen (12) derart angeordnet sind, dass die Verschiebung der ersten Halbschale (10) auf ihrer Achse (A) verhindert wird.

2. Gondel nach Anspruch 1, **dadurch gekennzeichnet, dass** die Blockiermittel einen Finger (20) aufweisen, der auf der ersten Halbschale (10) angeordnet ist, wobei die komplementären Blockiermittel eine Rille (17) aufweisen, die auf dem starren Rahmen (12) angeordnet ist oder umgekehrt.

3. Gondel nach Anspruch 2, **dadurch gekennzeichnet, dass** der Blockierfinger (20) in Arbeitsstellung der ersten Halbschale (10) von der Rille (17) entfernt ist und dass der Blockierfinger (20) in Wartungsstellung der ersten Halbschale (10) in die Rille (17) eingreift.

4. Gondel nach einem der Ansprüche 2 oder 3, **dadurch gekennzeichnet, dass** der Blockierfinger (20) in der Nähe der Gelenkachse (A) der entsprechenden Halbschale (9, 10) angeordnet ist.

5. Gondel nach einem der Ansprüche 2 bis 4, **dadurch gekennzeichnet, dass** die Rille (17) von einem U-Profil (16) begrenzt wird, das auf dem starren Rahmen (12) befestigt ist.

6. Gondel nach einem der Ansprüche 2 bis 5, **dadurch gekennzeichnet, dass** die Rille (17) Seitenwände (18, 19) aufweist, die im Verhältnis zueinander derart geneigt sind, dass sie bei der Annäherung der Halbschalen (9, 10) zueinander eine Verengung der Rille (17) in Richtung des Eingriffs des Blockierfingers (20) in die Rille bilden.

7. Gondel nach Anspruch 6, **dadurch gekennzeichnet, dass** die Breite des Blockierfingers (20) etwa der Breite der Rille (17) in ihrem verengten Bereich entspricht.

8. Gondel nach einem der Ansprüche 6 oder 7, **dadurch gekennzeichnet, dass** der Blockierfinger (20) und die entsprechende Rille (17) derart ausgebildet sind, dass bei Annäherung der Halbschalen (9, 10) zueinander der Kontakt der Positionierungsmittel (13) mit den komplementären Positionierungsmitteln (14) nur dann erlaubt wird, wenn der Finger (20) den verengten Bereich der Rille (17) erreicht.

9. Luftfahrzeug, **dadurch gekennzeichnet, dass** es mit mindestens einer Gondel nach einem der Ansprüche 1 bis 8 ausgestattet ist.
